# EUROPÄISCHE PATENTSCHRIFT

(11) **EP 3 262 943 B1**
(45) Veröffentlichungstag und Bekanntmachung des Hinweises auf die Patenterteilung: **13.03.2019**
(21) Anmeldenummer: 16177143.1
(22) Anmeldetag: 30.06.2016
(51) Int. Cl.: A22C 25/16, A22C 25/08

(54) **VORRICHTUNG UND VERFAHREN ZUM ENTFERNEN VON STIFTGRÄTEN AUS FISCHFILETS**
APPARATUS AND METHOD FOR REMOVING PIN-SHAPED BONES FROM FISH FILLETS
DISPOSITIF ET PROCEDE DE RETRAIT D'ARETES DANS DES FILETS DE POISSON

(43) Veröffentlichungstag der Anmeldung: 03.01.2018
(73) Patentinhaber: Nordischer Maschinenbau Rud. Baader GmbH + Co. KG, 23560 Lübeck (DE)
(72) Erfinder: Rusko, Torsten, 23923 Herrnburg (DE)
(74) Vertreter: Stork Bamberger Patentanwälte PartmbB

(56) Entgegenhaltungen:
- EP-A1- 1 237 416
- WO-A2-2015/150061
- US-A- 5 525 101
- US-B1- 8 840 448

## Beschreibung

Die vorliegende Erfindung betrifft eine Vorrichtung zum Entfernen von Stiftgräten aus Fischfilets, umfassend mindestens eine Stiftgrätenentfernungseinrichtung sowie eine zum Vorbeiführen des Fischfilets an der mindestens einen Stiftgrätenentfernungseinrichtung eingerichtete Fördereinrichtung, wobei die Stiftgrätenentfernungseinrichtung eine rotierend angetriebene profilierte Walze mit einem einen Klemmspalt bildenden Gegenlageelement aufweist, wobei die Walze und das Gegenlageelement eingerichtet sind, die Stiftgräten in dem Klemmspalt durch Klemmung zu fassen und unter Zugkraftbeaufschlagung aus den Fischfilets zu entfernen.

Des Weiteren betrifft die Erfindung ein Verfahren zum Entfernen von Stiftgräten aus Fischfilets, umfassend Vorbeiführen der Fischfilets an mindestens einer Stiftgrätenentfernungseinrichtung mittels einer Fördereinrichtung, Erfassen der Stiftgräten durch Klemmen mittels der Stiftgrätenentfernungseinrichtung in einem von einer rotierend angetriebenen profilierten Walze und einem Gegenlageelement gebildeten Klemmspalt, Beaufschlagen der Stiftgräten mit einer Zugkraft zum Entfernen der Stiftgräten aus den Fischfilets.

Derartige Vorrichtungen und Verfahren kommen insbesondere bei der automatischen Verarbeitung von Schlachtfischen zum Einsatz. Während des Verarbeitungsprozesses der Fische bzw. der Verarbeitung von Fischfilets ist es erforderlich, Fleisch- bzw. Stiftgräten aus dem Fleisch zu entfernen. Aus dem Dokument WO 02/076220 A1 ist eine Vorrichtung sowie ein Verfahren zum Filetieren geschlachteter Fische bereits bekannt. Die Stiftgräten werden mittels einer doppelt profilierten Walze aus den Fischfilets gezogen, indem diese mittels der Walze gegriffen bzw. geklemmt werden. Die Fischfilets bzw. Fische werden der doppelt profilierten Walze mittels einer Fördereinrichtung automatisch zugeführt. Aus dem Dokument US 5,525,101 ist eine Vorrichtung und ein Verfahren zum Entfernen von Stiftgräten aus Fischfilets bekannt.

Nachteilig ist, dass es beim Herauslösen der Stiftgräten aus dem Fleisch bzw. Fischfilet zu Verunreinigungen der Walze kommen kann, sodass der von der Walze und dem Gegenlageelement gebildete Klemmspalt blockiert wird. Derartige Verunreinigungen von Klemm- bzw. Zugwalze bzw. Blockaden des Klemmspalts führen einerseits dazu, dass die weitere Entfernung der Stiftgräten, englisch auch "Pinbones" genannt, gestört bzw. unmöglich ist.

Andererseits können im Klemmspalt verklemmte und dort über längere Zeit verbleibende Stiftgräten/Pinbones das zu bearbeitende Fischfilet beschädigen. Bis die Blockade des Klemmspalts bzw. verklemmte Stiftgräten im Klemmspalt vom Bedienpersonal erkannt worden ist, besteht daher die Gefahr, dass entweder die Entfernung der Stiftgräten nur unvollständig oder überhaupt nicht erfolgt und/oder die Fischfilets beschädigt werden. Während dieses Zeitraums ist mit einer hohen Ausschussrate zu rechnen. Darüber hinaus ist es erforderlich, den gesamten Produktionsprozess während der erforderlichen Reinigungsarbeiten anzuhalten. Hiervon ist in der Regel nicht nur die Vorrichtung zur Entfernung der Stiftgräten betroffen, sondern überdies auch vor- und nachgeschaltete Produktionsmaschinen.

Es ist daher Aufgabe der vorliegenden Erfindung, eine Vorrichtung vorzuschlagen, die eine höchst zuverlässige, ausschuss- und wartungsfreie vollautomatische Entfernung der Stiftgräten gewährleistet. Des Weiteren besteht die Aufgabe darin, ein entsprechendes Verfahren vorzuschlagen.

Die Aufgabe wird durch eine Vorrichtung mit den eingangs genannten Merkmalen dadurch gelöst, dass das Gegenlageelement und die Walze mittels Steuermitteln relativ zueinander steuerbeweglich eingerichtet sind. Dies bietet den Vorteil, dass der Abstand zwischen dem Gegenlageelement und der Walze mittels der Steuermittel insbesondere zu Reinigungszwecken temporär vergrößert werden kann. Durch diese Weitstellung des Klemmspaltes kommen im Klemmspalt verklemmte Stiftgräten bzw. weitere Fleischbestandteile frei, sodass der Klemmspalt selbstreinigend eingerichtet ist. Der Klemmspalt wird damit zuverlässig von dauerhaft eingeklemmten Stiftgräten sowie weiteren Bestandteilen oder Verunreinigungen selbsttätig gereinigt und ein zuverlässiges Entfernen der Stiftgräten zu jeder Zeit gewährleistet. Des Weiteren wird auf diese Weise eine Beschädigung der Fischfilets durch dauerhaft verklemmte Stiftgräten ebenfalls vermieden. Ein weiterer Vorteil besteht darin, dass durch die kontinuierlich erfolgende Reinigung des Klemmspaltes zugleich Verunreinigungen, die den eigentlichen Vorgang der Stiftgrätenentfernung behindern, von Gegenlageelement und Walze vermieden werden. Dieses wirkt sich insbesondere vorteilhaft im Hinblick auf die in der Lebensmittelverarbeitung hohen hygienischen Anforderungen aus.

Eine zweckmäßige Ausgestaltung der Erfindung ist dadurch gekennzeichnet, dass die Steuermittel eine Steuereinrichtung mit mindestens einem Stellglied umfassen, wobei die Steuereinrichtung eingerichtet ist, mittels des mindestens einen Stellgliedes das Gegenlageelement und die Walze aus einer Klemmstellung unter Weitung des Klemmspaltes in einer Reinigungsstellung und umgekehrt relativ zueinander zu bewegen. Besonders vorteilhaft ist, dass die Weitung des Klemmspaltes, das heißt das Bewegen des Gegenlageelementes bzw. der Walze aus der Klemmstellung in die Reinigungsstellung und umkehrt mittels der hierzu eingerichteten Steuermittel erfolgt. Die Reinigung des Klemmspaltes kann auf diese Weise mittels der Steuermittel zu beliebig vorgegebenen Zeitpunkten erfolgen. Vorzugsweise ist das Stellglied als steuerbar eingerichteter Pneumatikzylinder ausgebildet. Weiter bevorzugt ist das Stellglied unmittelbar bzw. mittelbar mit dem Gegenlageelement verbunden, sodass das Stellglied das Gegenlageelement relativ zu der Walze bewegt. Alternativ ist es möglich, das Stellglied an der Walze anzuordnen. In diesem Fall ist die Walze gegenüber dem Gegenlageelement bewegbar eingerichtet. Es ist auch möglich, sowohl das Gegenlageelement als auch die Walze mit Stellgliedern zu versehen und jeweils beide steuerbeweglich auszubilden.

Eine bevorzugte Weiterbildung der Erfindung zeichnet sich dadurch aus, dass die Stiftgrätenentfernungseinrichtung mittels mindestens eines weiteren Stellgliedes relativ zu der Fördereinrichtung steuerbeweglich eingerichtet ist. Anders ausgedrückt ist die erfindungsgemäße Stiftgrätenentfernungseinrichtung gegenüber der Fördereinrichtung anheb- bzw. absenkbar eingerichtet.

Diese zusätzliche Bewegbarkeit in der Vertikalen wirkt sich vorteilhaft auf das Reinigungsergebnis der Stiftgrätenentfernungseinrichtung aus. So kann durch Anheben der Stiftgrätenentfernungseinrichtung gegenüber der Fördereinrichtung eine zusätzliche Reinigungswirkung erzielt werden. Das weitere Stellglied ist vorzugsweise als steuerbarer Pneumatikzylinder ausgebildet und eingerichtet. Da die Stiftgrätenentfernungseinrichtung mittels des weiteren Stellgliedes von einer Absenkstellung, in der die Stiftgrätenentfernungseinrichtung soweit in Richtung der Fördereinrichtung abgesenkt ist, dass mittels der Stiftgrätenentfernungseinrichtung die Stiftgräten aus den Fischfilets entfernt werden können, in eine Hebestellung bewegbar eingerichtet ist, ist es mittels der erfindungsgemäßen Vorrichtung erstmals möglich, bereits die Reinigung des Klemmspaltes einzuleiten, während sich noch ein Teil des jeweiligen Fischfilets im Bereich der Stiftgrätenentfernungseinrichtung befindet. Durch das Verbringen der Stiftgrätenentfernungseinrichtung in die Hebestellung wird überhaupt erst die Voraussetzung geschaffen, das Gegenlageelement und die Walze aus der Klemmstellung in die Reinigungsstellung zu verfahren, da durch das Anheben der Stiftgrätenentfernungseinheit gegenüber der Fördereinrichtung diese von dem Fischfilet freikommt und so das Bewegen der Walze bzw. des Gegenlageelements relativ zueinander zu Reinigungszwecken nicht zu einer andernfalls möglichen Beschädigung des Fischfilets führen kann.

Gemäß einer bevorzugten Weiterbildung ist der Abstand zwischen der Stiftgrätenentfernungseinrichtung und der Fördereinrichtung einstellbar eingerichtet. So ist es möglich, in Abhängigkeit der zu bearbeitenden Fischfilets den für ein ideales Entfernungsergebnis optimalen Abstand zwischen der Stiftgrätenentfernungseinrichtung und der Fördereinrichtung einzustellen. Die freie Einstellbarkeit dieses Abstandes umfasst auch, den Abstand im laufenden Prozess an unterschiedliche Fischfilets anpassen zu können. Ein weiterer Vorteil besteht darin, dass der bisher erforderliche Einrüstaufwand beim Wechsel auf Fischfilets einer anderen Charge bzw. Fischart entfällt, da der Abstand zwischen der Stiftgrätenentfernungseinrichtung und der Fördereinrichtung mittels der Steuermittel automatisch verstellbar eingerichtet ist.

Eine weitere zweckmäßige Ausgestaltung der Erfindung zeichnet sich dadurch aus, dass die Auflagekraft, mit der die Stiftgrätenentfernungseinrichtung auf die Fischfilets wirkt, mittels der Steuermittel variabel einstellbar eingerichtet ist. Vorteilhafterweise wird so erreicht, dass die erforderliche Auflagekraft zur Erzielung eines optimalen Stiftgrätenentfernungsergebnisses angepasst werden kann. Auch hier entfallen Rüstzeiten zur Einrichtung der erfindungsgemäßen Vorrichtung auf unterschiedliche Produktchargen. Ferner ist es möglich, die Auflagekraft im laufenden Betrieb anzupassen und auf diese Weise jederzeit ein optimales Entfernungsergebnis zu erreichen.

Gemäß einer weiteren bevorzugten Ausbildung der Erfindung umfasst die Steuereinrichtung weiter eine zur Positionsbestimmung der an der Stiftgrätenentfernungseinrichtung vorbeigeführten Fischfilets eingerichtete Positionsermittlungseinrichtung. Die Positionsermittlungseinrichtung ist vorzugsweise als optisches Sensorsystem eingerichtet und ausgebildet, beispielsweise als Kamerasystem mit entsprechender Auswerteelektronik oder als Lichtschranke. Mittels der Positionsermittlungseinrichtung wird die jeweilige Position der an der Stiftgrätenentfernungseinrichtung vorbeigeführten Fischfilets bestimmt bzw. ermittelt.

Eine vorteilhafte Ausbildung der Erfindung ist dadurch gekennzeichnet, dass die Positionsermittlungseinrichtung weiter zum Ermitteln von ersten Zeitpunkten, zu denen grätenfreie Bereiche der Fischfilets im Bereich des Klemmspalts vorbeigeführt werden, ausgebildet und eingerichtet ist. Anders ausgedrückt ist die Positionsermittlungseinrichtung nicht nur zur Bestimmung der aktuellen Position der jeweiligen Fischfilets ausgebildet und eingerichtet, sondern darüber hinaus in der Lage, zwischen grätenfreien Bereichen der Fischfilets und solchen mit im Fleisch vorhandenen Stiftgräten zu differenzieren.

Weiter bevorzugt ist die Positionsermittlungseinrichtung zum Ermitteln von zweiten Zeitpunkten, zu denen der Bereich des Klemmspalts fischfiletfrei ist, ausgebildet und eingerichtet. Die Positionsermittlungseinrichtung ist folglich ausgebildet, die Position jedes der Fischfilets nachzuverfolgen. Die hierzu von der Positionsermittlungseinrichtung bereitgestellten Signale bzw. Daten liefern auf diese Weise Informationen, ob sich im Bereich der Stiftgrätenentfernungseinrichtung, also in einem Bereich vor dem Klemmspalt, überhaupt eines der Fischfilets zum jeweiligen Zeitpunkt befindet, und falls dies der Fall ist, zum Bestimmen, ob der sich jeweils im Bereich der Stiftgrätenentfernungseinrichtung befindende Bereich des jeweiligen der Fischfilets Stiftgräten umfasst oder nicht.

Gemäß einer weiteren zweckmäßigen Ausgestaltung der Erfindung ist vorgesehen, dass die Positionsermittlungseinrichtung eingerichtet ist, die Steuermittel innerhalb vorgegebener Zeitintervalle jeweils zu den ersten Zeitpunkten und/oder zu den zweiten Zeitpunkten zu veranlassen, mittels des mindestens einen Stellgliedes das Gegenlageelement in die Reinigungsstellung zu überführen. Anders ausgedrückt wird mittels der Steuermittel auf Basis der von der Positionsermittlungseinrichtung ermittelten Position der Fischfilets bzw. der entsprechenden ersten und zweiten Zeitpunkte das mindestens eine Stellglied veranlasst, das Gegenlageelement bzw. die Walze in die Reinigungsstellung zu überführen. Vorteilhafterweise erfolgt daher also die Reinigung des Klemmspalts immer nur dann, wenn sich keines der Fischfilets im Bereich der Stiftgrätenentfernungseinrichtung befindet bzw. ein stiftgrätenfreier Bereich die Stiftgrätenentfernungseinrichtung passiert. Dies bietet den Vorteil, dass die Reinigung des Klemmspaltes im laufenden Betrieb erfolgt und hierzu keine zusätzliche Zeit benötigt wird. Dadurch ist es möglich, die Fischfilets mit möglichst hoher Fördergeschwindigkeit und einer daraus resultierenden hohen Durchsatzleistung vollautomatisch von den Stiftgräten zu befreien.

Gemäß einer bevorzugten Weiterbildung ist vorgesehen, dass die Positionsermittlungseinrichtung weiter eingerichtet ist, die Steuermittel innerhalb der vorgegebenen Zeitintervalle jeweils zu den ersten Zeitpunkten und/oder zu den zweiten Zeitpunkten zu veranlassen, mittels des mindestens einen weiteren Stellglieds den Abstand zwischen der Fördereinrichtung und der Stiftgrätenentfernungseinrichtung zeitweilig zu vergrößern. Wie bereits eingangs beschrieben, bietet dies den Vorteil, dass die Reinigung des Klemmspalts bereits eingeleitet werden kann, auch wenn sich noch jeweils eines der Fischfilets im Bereich der Stiftgrätenentfernungseinrichtung befindet. Durch das Anheben der Stiftgrätenentfernungseinrichtung in vertikale Richtung gegenüber der Fördereinrichtung ist eine Beschädigung der Fischfilets während des Reinigungsvorgangs ausgeschlossen.

Eine weitere zweckmäßige Ausbildung der Erfindung ist dadurch gekennzeichnet, dass das Gegenlageelement mittels des mindestens einen Stellgliedes unter Rückstellkraftbeaufschlagung zum Klemmen der Stiftgräten ausweichlich gelagert ist. Das mindestens eine Stellglied erfüllt somit eine Doppelfunktion: Einerseits ist das mindestens eine Stellglied eingerichtet, das Gegenlageelement und die Walze aus der Klemmstellung in die Reinigungsstellung und umgekehrt relativ zueinander zu bewegen und andererseits ist das Gegenlageelement über das mindestens eine Stellglied federnd gelagert. Die federnde Lagerung bewirkt einerseits die zum Greifen der Stiftgräten erforderliche Klemmkraft, andererseits kann so das Gegenlageelement beim Einzug von Stiftgräten größeren Durchmessers entgegen der wirkenden Federkraft entsprechend ausweichen. Die Rückstellkraftbeaufschlagung bewirkt ein selbsttätiges Rückstellen des Gegenlageelements in Richtung der Walze.

Gemäß einer vorteilhaften Weiterbildung der Erfindung ist die Größe der Rückstellkraftbeaufschlagung mittels der Steuermittel variabel einstellbar eingerichtet. Vorteilhafterweise kann so die Klemmkraft, mit der die Stiftgräten in den Klemmspalt erfasst werden, zur Optimierung des Stiftgrätenentfernungsvorgangs angepasst werden.

Gemäß einer weiteren vorteilhaften Ausbildung ist vorgesehen, dass das Gegenlageelement schwimmend gelagert angeordnet ist. Im Zusammenhang mit den damit erzielten Vorteilen wird auf die entsprechenden Passagen der Figurenbeschreibung im Folgenden verwiesen, um Wiederholungen zu vermeiden.

Des Weiteren wird die Aufgabe durch ein entsprechendes Verfahren mit den eingangs genannten Merkmalen dadurch gelöst, dass das Bewegen des Gegenlageelements und der Walze relativ zueinander mittels der Steuermittel gesteuert erfolgt.

Eine weitere zweckmäßige Ausgestaltung der Erfindung zeichnet sich durch Ansteuern mindestens eines Stellgliedes mittels der Steuermittel, so dass das Gegenlageelement und die Walze aus einer Klemmstellung oder Weitung des Klemmspaltes in eine Reinigungsstellung und umgekehrt relativ zueinander bewegt werden, aus.

Gemäß einer weiteren bevorzugten Ausbildung der Erfindung wird die Stiftgrätenentfernungseinrichtung mittels mindestens eines weiteren Stellgliedes, das durch die Steuermittel angesteuert wird, relativ zu der Fördereinrichtung gesteuert bewegt.

Eine vorteilhafte Ausbildung der Erfindung sieht vor, dass der Abstand zwischen der Stiftgrätenentfernungseinrichtung und der Fördereinrichtung voreinstellbar ist.

Gemäß einer weiteren bevorzugten Ausbildung ist eine Auflagekraft, mit der die Stiftgrätenentfernungseinrichtung auf die Fischfilets wirkt, mittels der Steuermittel variabel einstellbar eingerichtet.

Das erfindungsgemäße Verfahren zeichnet sich weiter durch Ermitteln der Position der an der Stiftgrätenentfernungseinrichtung vorbeigeführten Fischfilets mittels einer Positionsermittlungseinrichtung aus. Eine weitere zweckmäßige Ausbildung der Erfindung ist gekennzeichnet durch Ermitteln von ersten Zeitpunkten, zu denen grätenfreie Bereiche der Fischfilets im Bereich des Klemmspalts vorbeigeführt werden. Das Ermitteln der vorgenannten Zeitpunkte erfolgt mittels der Positionsermittlungseinrichtung.

Gemäß einer weiteren vorteilhaften Ausbildung der Erfindung werden zweite Zeitpunkte, zu denen der Bereich des Klemmspalts fischfiletfrei ist, mittels der Positionsermittlungseinrichtung ermittelt.

Gemäß einer bevorzugten Ausbildung der Erfindung wird innerhalb vorgegebener Zeitintervalle veranlasst, jeweils zu den ersten Zeitpunkten und/oder zu den zweiten Zeitpunkten mittels des mindestens einen Stellgliedes das Gegenlageelement in die Reinigungsstellung zu verbringen.

Weiter bevorzugt ist vorgesehen, innerhalb der vorgegebenen Zeitintervalle jeweils zu den ersten Zeitpunkten und/oder zu den zweiten Zeitpunkten mittels des mindestens einen weiteren Stellgliedes den Abstand zwischen der Fördereinrichtung und der Stiftgrätenentfernungseinrichtung zeitweilig zu vergrößern.

Gemäß einer zweckmäßigen Fortbildung der Erfindung wird das Gegenlageelement mittels des mindestens einen Stellgliedes mit einer Rückstellkraft zum Klemmen der Stiftgräten beaufschlagt, so dass das Gegenlageelement ausweichlich gelagert ist.

Weiter bevorzugt ist die Größe der Beaufschlagung des Gegenlageelements mit der Rückstellkraft mittels der Steuermittel variable einstellbar.

Zur Vermeidung von Wiederholung wird bezüglich der Vorteile des erfindungsgemäßen Verfahrens auf die zuvor genannten Vorteile der erfindungsgemäßen Vorrichtung verwiesen. Die dort genannten Vorzüge gelten in analoger Weise auch für das erfindungsgemäße Verfahren.

Gemäß einer weiteren vorteilhaften Ausbildung des erfindungsgemäßen Verfahrens ist vorgesehen, das Gegenlageelement schwimmend zu lagern.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine perspektivische Ansicht der erfindungsgemäßen Vorrichtung aus einer ersten Blickrichtung,
- Fig. 2: eine perspektivische Ansicht der erfindungsgemäßen Vorrichtung aus einer zweiten Blickrichtung,
- Fig. 3: eine schematische Darstellung der erfindungsgemäßen Vorrichtung in Seitenansicht,
- Fig. 4: eine Detailansicht der erfindungsgemäßen Vorrichtung mit dem Gegenlageelement in Klemmstellung,
- Fig. 5: eine Detailansicht der erfindungsgemäßen Vorrichtung mit dem Gegenlageelement in Reinigungsstellung,
- Fig. 6: eine Detailansicht der erfindungsgemäßen Vorrichtung in Absenkstellung,
- Fig. 7: eine Detailansicht der erfindungsgemäßen Vorrichtung in Hebestellung,
- Fig. 8: eine weitere Detailansicht der erfindungsgemäßen Vorrichtung mit dem Gegenlageelement in Klemmstellung,
- Fig. 9: eine weitere Detailansicht der erfindungsgemäßen Vorrichtung mit dem Gegenlageelement in Reinigungsstellung
und
- Fig. 10: die in den Figur 8 gezeigte Detailansicht mit Blickrichtung von unten.

Im Folgenden wird die erfindungsgemäße Vorrichtung anhand der eingangs genannten Figuren näher erläutert. Zur Vermeidung von Wiederholung wird neben der erfindungsgemäßen Vorrichtung zugleich das erfindungsgemäße Verfahren im Detail erörtert.

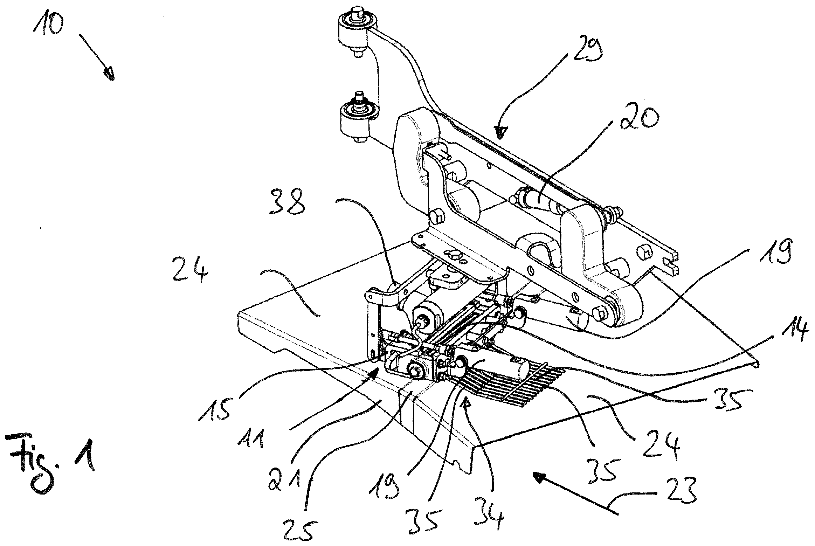

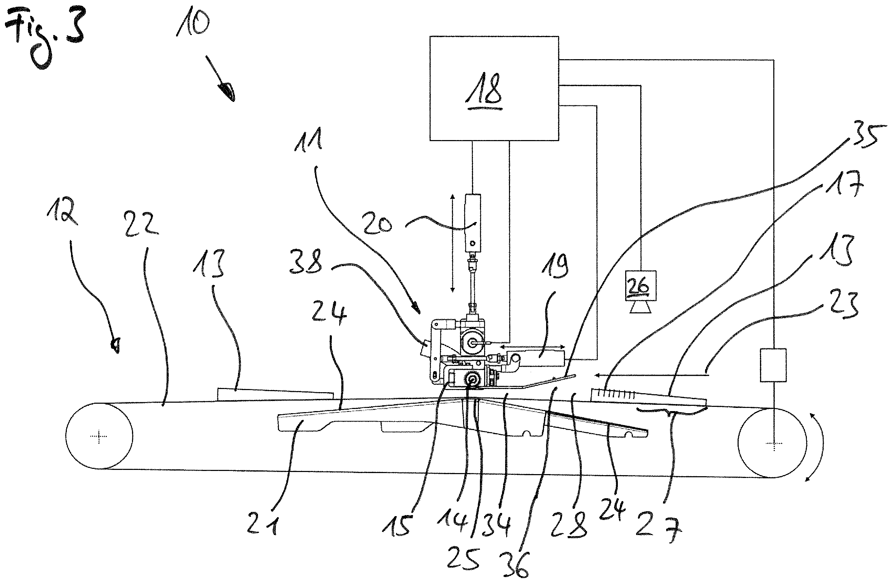

Fig. 1 zeigt eine perspektivische Ansicht der erfindungsgemäßen Vorrichtung aus einer ersten Blickrichtung. Die vorliegende Erfindung umfasst eine Vorrichtung 10, die zum Entfernen von Stiftgräten aus Fischfilets 13 ausgebildet und eingerichtet ist. Die gezeigte Vorrichtung 10 umfasst mindestens eine Stiftgrätenentfernungseinrichtung 11. Wie der schematischen Darstellung in Fig. 3 zu entnehmen ist, umfasst die erfindungsgemäße Vorrichtung eine Fördereinrichtung 12, die ausgebildet und eingerichtet ist, die Fischfilets 13 an der mindestens einen Stiftgrätenentfernungseinrichtung 11 vorbeizuführen. Aus Gründen der besseren Übersichtlichkeit ist in der Zeichnung jeweils nur eine der Stiftgrätenentfernungseinrichtungen 11 gezeigt. Vorzugsweise sind jedoch mehrere der Stiftgrätenentfernungseinrichtungen 11 nebeneinander oberhalb der Fördereinrichtung 12 angeordnet, so dass mehrere der Fischfilets 13 parallel be- bzw. verarbeitet werden. Die Fördereinrichtung 12 verfügt in diesem Fall über eine entsprechende Breite, um mehrere der Fischfilets 13 parallel nebeneinanderliegend zu fördern.

Die Stiftgrätenentfernungseinrichtung 11 umfasst eine rotierend angetriebene profilierte Walze 14, die mit einem Gegenlageelement 15 einen Klemmspalt 16 bildet. Die Walze 14 und das Gegenlageelement 15 sind eingerichtet, die Stiftgräten 17 in dem Klemmspalt 16 durch Klemmung zu fassen und unter Zugkraftbeaufschlagung aus den Fischfilets 13 zu entfernen. Anders ausgedrückt, gelangen die aus dem Fischfilet 13 hervorstehenden bzw. durch Andruck der Stiftgrätenentfernungseinrichtung 11 greifbaren Stiftgräten 17 in den Klemmspalt 16 und werden mittels der rotierend angetriebenen profilierten Walze 14 gefasst und aus den Fischfilets 13 herausgezogen. Vorteilhafterweise sind das Gegenlageelement 15 und die Walze 14 mittels Steuermitteln 18 relativ zueinander steuerbeweglich eingerichtet. Auf diese Weise lässt sich die Breite des Klemmspalts 16 während des Betriebs der erfindungsgemäßen Vorrichtung 10 beliebig einstellen.

Der erfindungsgemäße Verfahrensablauf stellt sich daher wie folgt dar: Zum Entfernen der Stiftgräten 17 aus den Fischfilets 13 werden diese an mindestens einer der Stiftgrätenentfernungseinrichtungen 11 mittels der Fördereinrichtung 12 vorbeigeführt. Die Stiftgräten 17 werden durch Klemmen mittels der Stiftgrätenentfernungseinrichtung 11 erfasst, indem diese in den Klemmspalt 16 aufgenommen werden. Beim Eintritt der Stiftgräten 17 in den Klemmspalt 16, der von der rotieren angetriebenen profilierten Walze 14 und dem Gegenlageelement 15 gebildet wird, werden die Stiftgräten 17 mit einer Zugkraft beaufschlagt und so aus den Fischfilets 13 entfernt. Das erfindungsgemäße Verfahren zeichnet sich insbesondere dadurch aus, dass das Gegenlageelement 15 und die Walze 14 relativ zueinander mittels der Steuermittel 18 bewegt werden.

Vorzugsweise umfassen die Steuermittel 18 eine Steuereinrichtung mit mindestens einem Stellglied 19. Die Steuereinrichtung bzw. die Steuermittel 18 ist bzw. sind eingerichtet, mittels des mindestens einen Stellgliedes 19 das Gegenlageelement 15 und die Walze 14 aus einer Klemmstellung in eine Reinigungsstellung und umgekehrt relativ zueinander zu bewegen.

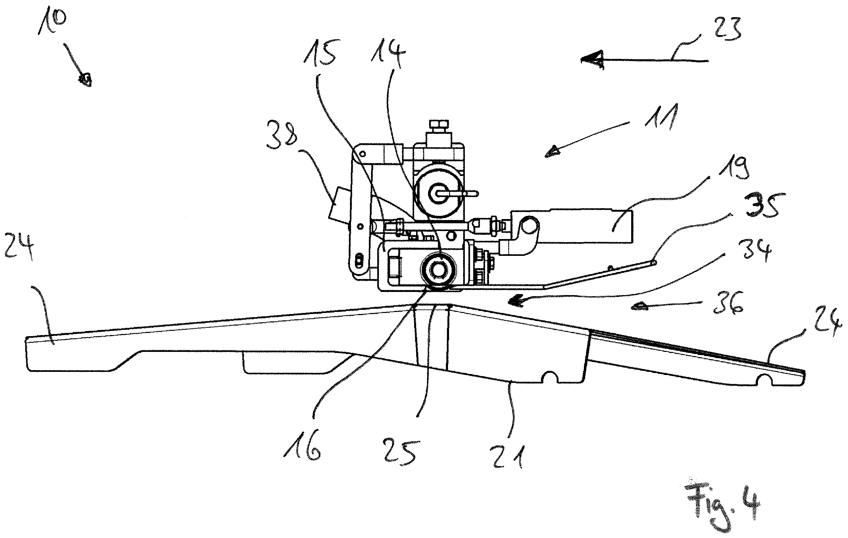

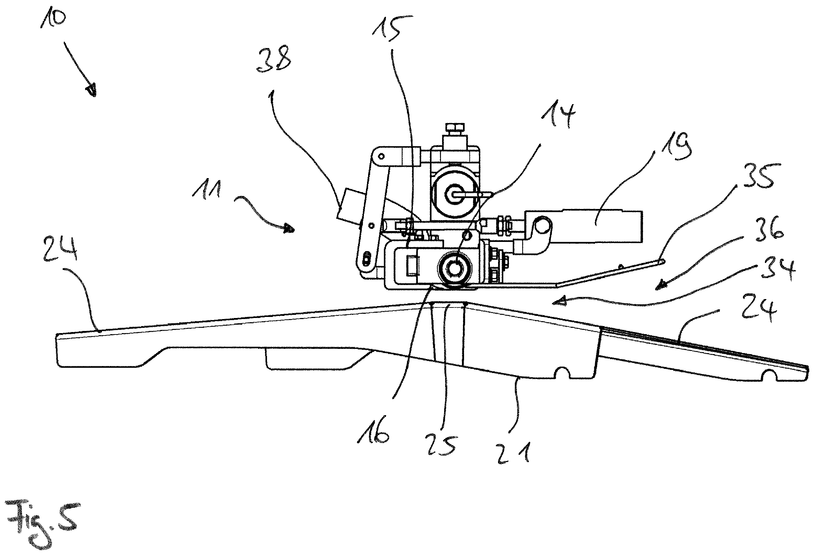

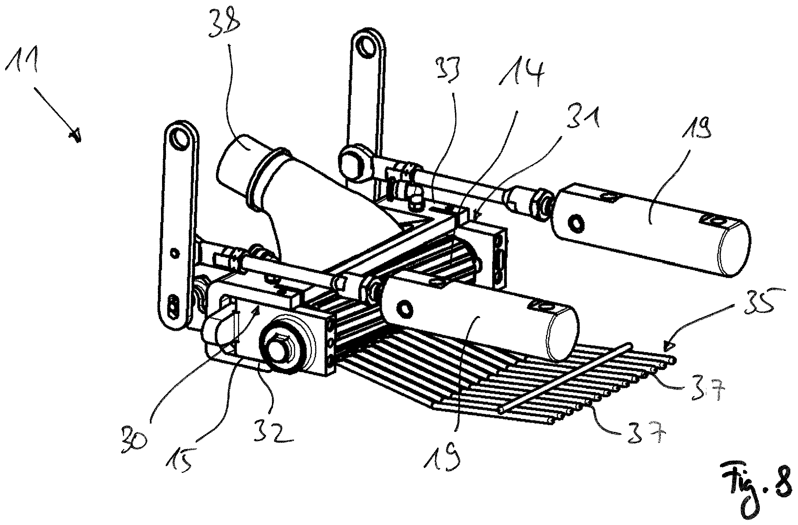

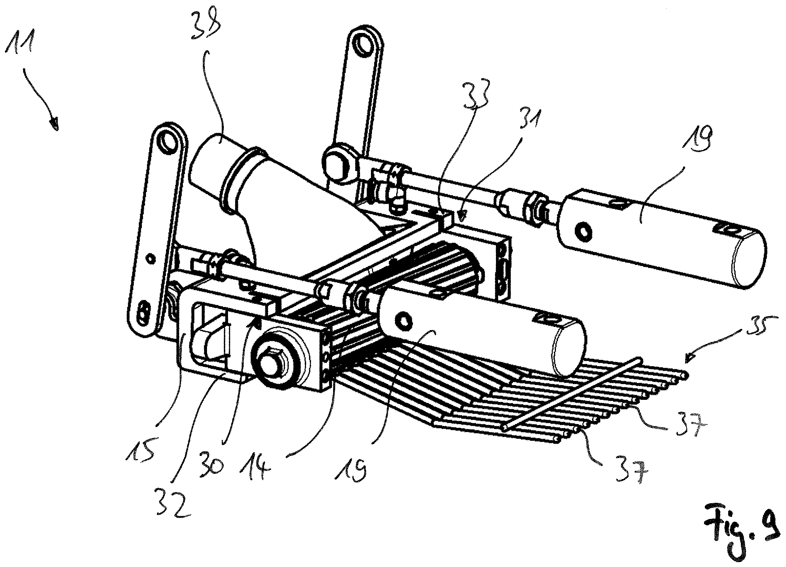

Die Klemmstellung ist in den Fig. 4 und 8 gezeigt, während die Fig. 5 und 9 jeweils die Reinigungsstellung veranschaulichen. Das Bewegen des Gegenlageelements 15 relativ zu der Walze 14 aus der Klemmstellung in die Reinigungsstellung erfolgt unter Weitung des Klemmspaltes 16. Das jeweilige der Stellglieder 19 steht mit dem Gegenlageelement 15 in Wirkverbindung. Es wird darauf hingewiesen, dass die Zeichnung beispielhaft nur eine mögliche Ausführungsform der vorliegenden Erfindung zeigt, bei der das Gegenlageelement 15 mittels des Stellgliedes 19 bewegbar ausgebildet ist. Die rotierend angetriebene profilierte Walze 14 ist hingegen im Wesentlichen ortsfest angeordnet.

Alternativ ist es möglich, das Gegenlageelement 15 bezüglich der Vorrichtung 10 ortsfest anzuordnen, während die Walze 14 mittels des Stellgliedes 19 in ihrer Position relativ zu dem Gegenlageelement 15 bewegbar eingerichtet ist. Gemäß einer weiteren vorteilhaften Ausführung der Erfindung, die in der Zeichnung nicht gezeigt ist, sind sowohl das Gegenlageelement 15 als auch die Walze 14 steuerbeweglich eingerichtet.

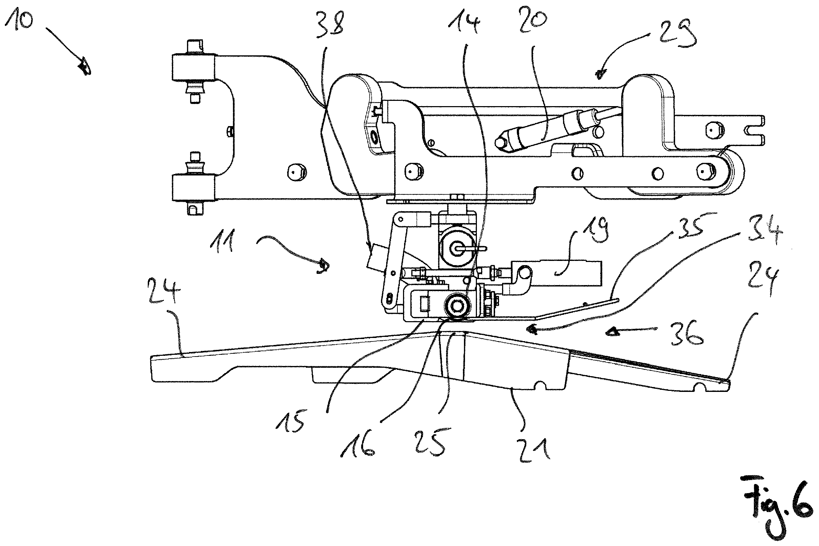

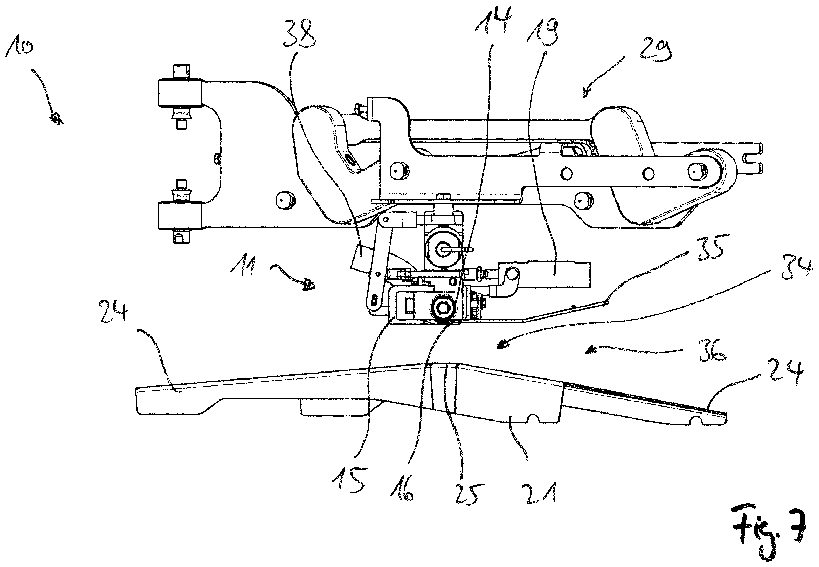

Vorzugsweise ist die Stiftgrätenentfernungseinrichtung 11 mittels mindestens eines weiteren Stellgliedes 20 relativ zu der Fördereinrichtung 12 steuerbeweglich eingerichtet. Auf diese Weise ist es möglich, die Stiftgrätenentfernungseinrichtung 11 in Richtung der Fördereinrichtung 12 abzusenken bzw. diese gegenüber der Fördereinrichtung 12 anzuheben. In den Detailansichten der Fig. 6 und 7 sind jeweils die entsprechenden Stellungen gezeigt. Fig. 6 zeigt die erfindungsgemäße Vorrichtung in einer Absenkstellung, während Fig. 7 die erfindungsgemäße Vorrichtung in einer Hebestellung zeigt. In der Absenkstellung ist die Stiftgrätenentfernungseinrichtung 11 mittels des weiteren Stellglieds 20 jedenfalls soweit in Richtung der Fördereinrichtung 12 abgesenkt, dass die Stiftgrätenentfernungseinrichtung 11 mit den mittels der Fördereinrichtung 12 geförderten Fischfilets 13 zum Entfernen der Stiftgräten 17 in Kontakt kommt. Hingegen kommt die Stiftgrätenentfernungseinrichtung 11 in der Hebestellung von den Fischfilets 13 frei, so dass aufgrund des räumlichen Abstands zwischen Stiftgrätenentfernungseinrichtung 11 und der Fördereinrichtung 12 eine Selbstreinigungswirkung erzielt wird.

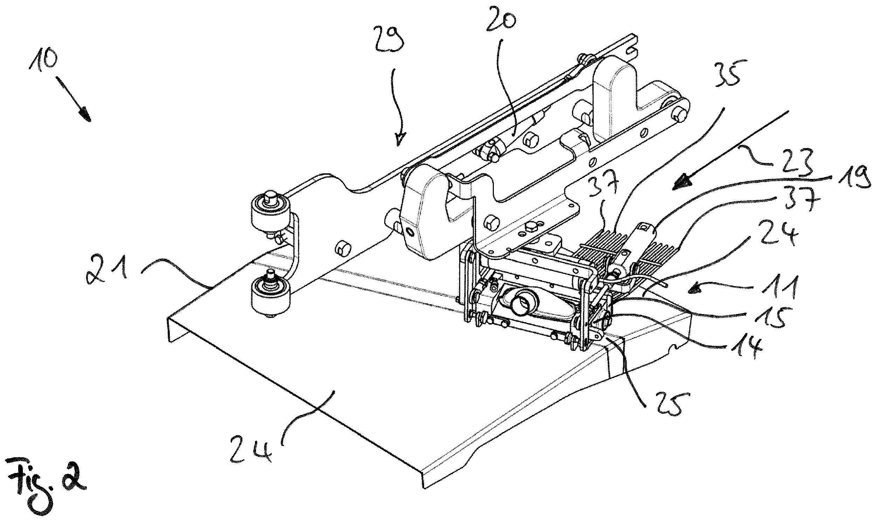

Wie in den Fig. 1 bis 7 gezeigt, umfasst die Fördereinrichtung 12 vorzugsweise ein Stützelement. Die Fischfilets 13 werden mittels eines Förderbandes 22 - das aus Gründen der besseren Übersichtlichkeit ausschließlich in der Fig. 3 gezeigt ist - in eine Förderrichtung 23 gefördert. Das Stützelement 21 ist unterhalb der durch das Förderband 22 gebildeten Förderebene angeordnet. Weiter bevorzugt ist das Stützelement 21 als Stütztisch ausgebildet. Vorzugsweise umfasst das Stützelement 21 jeweils geneigte Ebenen 24. Die geneigten Ebenen 24 gehen jeweils in einen Stützbereich 25 über, der horizontal bzw. im Wesentlichen horizontal ausgerichtet ist.

Vorzugsweise ist der Abstand zwischen der Stiftgrätenentfernungseinrichtung 11 und der Fördereinrichtung 12 einstellbar eingerichtet. So ist es möglich, den kleinstmöglichen Abstand der Stiftgrätenentfernungseinrichtung 11 in der in Fig. 6 gezeigten Absenkstellung frei einzustellen. Auf diese Weise kann die erfindungsgemäße Vorrichtung 10 flexibel an verschiedene Bearbeitungssituationen und/oder Fischfilettypen angepasst werden. Weiter bevorzugt ist das Steuermittel 18 ausgebildet, den vorgenannten Abstand voreinzustellen. Dies ermöglicht eine Anpassung des kleinsten Abstandes zwischen der Stiftgrätenentfernungseinrichtung 11 und der Fördereinrichtung 12 in der Absenkstellung während des laufenden Betriebs.

Vorzugsweise ist die erfindungsgemäße Stiftgrätenentfernungseinrichtung 11 gegenüber der Förderrichtung 23 unter Schrägstellung angeordnet. Mit anderen Worten ist die Stiftgrätenentfernungseinrichtung 11 nicht rechtwinklig zu der Fördereinrichtung 12 und der Förderrichtung 23 angeordnet, sondern schräg ausgerichtet angeordnet. Dies bietet den Vorteil, dass die durch die Walze 14 und das Gegenlageelement 15 auf die Stiftgräten 13 wirkende Zugkraft ebenfalls entsprechend schräg gerichtet ist. Auf diese Weise wirkt die Zugkraft im Wesentlichen in Wuchsrichtung der Stiftgräten 17 in den Fischfilets 13, also bezüglich der Stiftgräten 17 längsaxial. Hierdurch werden Querzugkräfte auf die Stiftgräten 17 vermieden, die häufig Ursache für ein Abbrechen der Stiftgräten 17 beim Entfernen sind und zu einem unvollständigen Entfernen der Stiftgräten 17 aus den Fischfilets 13 führen würde.

Gemäß einer bevorzugten Ausbildung der Erfindung ist vorgesehen, dass die Auflagekraft, mit der die Stiftgrätenentfernungseinrichtung 11 auf die Fischfilets 13 wirkt, mittels der Steuermittel 18 variabel einstellbar eingerichtet ist. Auf diese Weise wird erreicht, dass die Walze 14 mit definierter Auflagekraft auf die Fischfilets 13 einwirkt. Das weitere Stellglied 20 erfüllt hierzu eine Doppelfunktion. Einerseits ist das weitere Stellglied 20 eingerichtet, die Stiftgrätenentfernungseinrichtung 11 in vertikaler Richtung zwischen der Reinigungsstellung und der Absenkstellung zu verfahren. Andererseits ist das weitere Stellglied 20 derart selbstrückstellend ausgebildet, dass dieses eine definierte Auflagekraft auf den Fischfilets 13 bewirkt.

Weiter bevorzugt umfasst die Steuereinrichtung mit dem Steuermittel 18 eine Positionsermittlungseinrichtung 26, die zur Positionsbestimmung der an der Stiftgrätenentfernungseinrichtung 11 vorbeigeführten Fischfilets 13 ausgebildet und eingerichtet ist. Die Positionsermittlungseinrichtung 26 ist vorzugsweise als optisches Sensorsystem ausgebildet, beispielsweise als Kamera oder Lichtschranke. Die von der Positionsermittlungseinrichtung 26 bereitgestellten Positionsdaten bzw. Positionssignale werden mittels des Steuermittels zur Positionsbestimmung ausgewertet. Alternativ ist es möglich, dass die Positionsermittlungseinrichtung 26 neben dem vorgenannten Sensorsystem entsprechende Auswertemittel umfasst. Die Auswertemittel sind entsprechend eingerichtet, die von dem optischen System bereitgestellten Signale bzw. Daten zur Positionsbestimmung der Fischfilets 13 auszuwerten und so die entsprechenden Positionsdaten bzw. Positionssignale zu ermitteln. In diesem Fall liefert die Positionsermittlungseinrichtung 26 entsprechende Positionsdaten der Fischfilets 13 an die Steuermittel 18, in der die Positionsdaten der Fischfilets 13 direkt weiterverarbeitet werden.

Vorteilhafterweise ist die Positionsermittlungseinrichtung 26 ferner ausgebildet, erste Zeitpunkte zu ermitteln, zu denen grätenfreie Bereiche 27 der Fischfilets 13 im Bereich des Klemmspalts 16 vorbeigeführt werden. In den Steuermitteln 18 werden so anhand der ersten Zeitpunkte Informationen bereitgestellt, die Rückschluss darauf zulassen, zu welchem Zeitpunkt sich jeweils eines der Fischfilets 13 im Wirkbereich der Stiftgrätenentfernungseinrichtung 11 befindet und ob Stiftgräten 17 augenblicklich zu entfernen sind oder gegebenenfalls grätenfreie Bereich die Stiftgrätenentfernungseinrichtung 11 passieren.

Vorzugsweise ist die Positionsermittlungseinrichtung 26 weiter eingerichtet, zweite Zeitpunkte zu ermitteln, zu denen der Bereich des Klemmspalts 16 fischfiletfrei ist. Auf diese Weise werden nicht belegte Bereiche 28, also fischfiletfreie Bereiche, erkannt und über die ermittelten zweiten Punkte referenziert.

Die Positionsermittlungseinrichtung 26 ist bevorzugt eingerichtet, die Steuermittel 18 zu veranlassen, dass das Gegenlageelement 15 innerhalb vorgegebener Zeitintervalle jeweils zu den ersten Zeitpunkten und/oder zu den zweiten Zeitpunkten in die Reinigungsstellung überführt wird. Das Überführen in die Reinigungsstellung erfolgt mittels des mindestens einen Stellgliedes 19, das hierzu entsprechend mittels der Steuermittel 18 angesteuert wird. Hierbei ist es sowohl möglich, mittels des Stellgliedes 19 das Gegenlageelement 15 zu bewegen, als auch die Walze 14 mittels des Stellgliedes 19 gegenüber dem Gegenlageelement 15 zu bewegen.

Mit anderen Worten sind die Steuermittel eingerichtet, jeweils beim Passieren grätenfreier Bereiche 27 bzw. nicht belegter Bereiche 28 zu veranlassen, dass die Reinigungsstellung eingenommen wird. Die unterschiedlichen Positionen des Gegenlageelements 15 in der Klemmstellung bzw. in der Reinigungsstellung sind insbesondere aus dem Detailansichten gemäß Fig. 4 und Fig. 5 ersichtlich. Entsprechend der dort gezeigten Ausführungsform ist das Gegenlageelement 15 mittels des daran angeordneten Stellgliedes 19 steuerbeweglich ausgebildet und eingerichtet. Wie eingangs erwähnt, ist es jedoch alternativ auch möglich, mittels des Stellgliedes 19 die Walze 14 steuerbeweglich einzurichten, während das Gegenlageelement 15 bezüglich der Stiftgrätenentfernungseinrichtung 11 ortsfest angeordnet ist.

Gemäß einer weiteren vorteilhaften Ausgestaltung der Erfindung, die in der Zeichnung nicht gezeigt ist, ist vorgesehen, sowohl das Gegenlageelement 15 als auch die Walze 14 steuerbeweglich derart einzurichten, dass jeweils beide relativ zueinander bewegt werden, um von der Klemmstellung in die Reinigungsstellung und umgekehrt überführt zu werden. Vorteilhafterweise ist die Positionsermittlungseinrichtung 26 weiter eingerichtet, die Steuermittel 18 innerhalb der vorgegebenen Zeitintervalle jeweils zu den ersten Zeitpunkten und/oder zu den zweiten Zeitpunkten zu veranlassen, mittels des mindestens einen weiteren Stellgliedes 20 den Abstand zwischen der Fördereinrichtung 12 und der Stiftgrätenentfernungseinrichtung 11 zeitweilig zu vergrößern. Vorzugsweise steht hierzu das weitere Stellglied 20 in Wirkverbindung mit der Stiftgrätenentfernungseinrichtung 11, so dass die Stiftgrätenentfernungseinrichtung 11 aus einer Absenkstellung in eine Hebestellung bewegt werden kann und umgekehrt. Detailansichten der erfindungsgemäßen Vorrichtung in Absenkstellung bzw. in Hebestellung sind in den Fig. 6 und 7 gezeigt. Die Wirkverbindung zwischen dem weiteren Stellglied 20 und der Stiftgrätenentfernungseinrichtung 11 wird vorzugsweise mittels einer Parallelschwinge 29 hergestellt. Alternativ ist es möglich, das weitere Stellglied 20 unmittelbar an der Stiftgrätenentfernungseinrichtung 11 anzuordnen.

Vorteilhafterweise ist das Gegenlageelement 15 mittels des mindestens einen Stellgliedes 19 unter Rückstellkraftbeaufschlagung zum Klemmen der Stiftgräten 17 ausweichlich gelagert. Das Stellglied 19 erfüllt damit eine Doppelfunktion. Zum einen ist das Stellglied 19 eingerichtet, das Gegenlageelement 15 und die Walze 14 relativ zueinander zu bewegen. Zum anderen ist das Stellglied federelementartig eingerichtet, das das Gegenlageelement 15 mit einer in Richtung der Walze 14 gerichteten Rückstellkraft beaufschlagt. Auf diese Weise wird das Gegenlageelement 15 selbsttätig in Richtung der Walze 14 gedrückt und auf diese Weise die zum Klemmen der Stiftgräten 17 erforderliche Klemmkraft bereitgestellt. Vorzugsweise sind die Steuermittel 18 derart eingerichtet, dass die minimale Breite des Klemmspalts 16 über diese voreingestellt werden kann. Auf diese Weise kann die Breite des Klemmspalts 16 an die jeweils zu verarbeitenden der Fischfilets 13 angepasst werden, so dass im Ergebnis immer eine optimale Entfernung der Stiftgräten 17 gewährleistet ist.

Weiter bevorzugt ist die Größe der Rückstellkraftbeaufschlagung mittels der Steuermittel 18 variabel einstellbar eingerichtet und ausgebildet. So kann die auf die in dem Klemmspalt 16 befindlichen Stiftgräten 17 wirkende Klemmkraft ebenfalls optimal an die Gegebenheiten der zu verarbeitenden Fischfilets 13 angepasst werden.

Die weiteren Detailansichten gemäß Fig. 8 und 9 zeigen die erfindungsgemäße Vorrichtung mit dem Gegenlageelement 15 jeweils in der Klemm- bzw. der Reinigungsstellung. Wie in den Fig. 8 und 9 gezeigt, ist das Gegenlageelement 15 vorzugsweise schwimmend gelagert angeordnet. Das Gegenlageelement 15 ist daher derart gelagert, dass dieses beim Klemmen der Stiftgräten 17 in dem Klemmspalt 16 gegenüber der Drehachse der Walze 14 nicht nur parallelverschieblich ausweicht, sondern gegebenenfalls auch eine gewisse Schrägausrichtung zulässt. Auf diese Weise ist es beispielsweise möglich, unterschiedlich dicke Stiftgräten 17 über die Breite der Walze 14 mit einer im Wesentlichen konstanten Klemmkraft zu beaufschlagen. Vorzugsweise ist das Gegenlageelement 15 jeweils mit seinen Randbereichen 32, 33 unter Bildung von Gleitführungen 30, 31 gelagert.

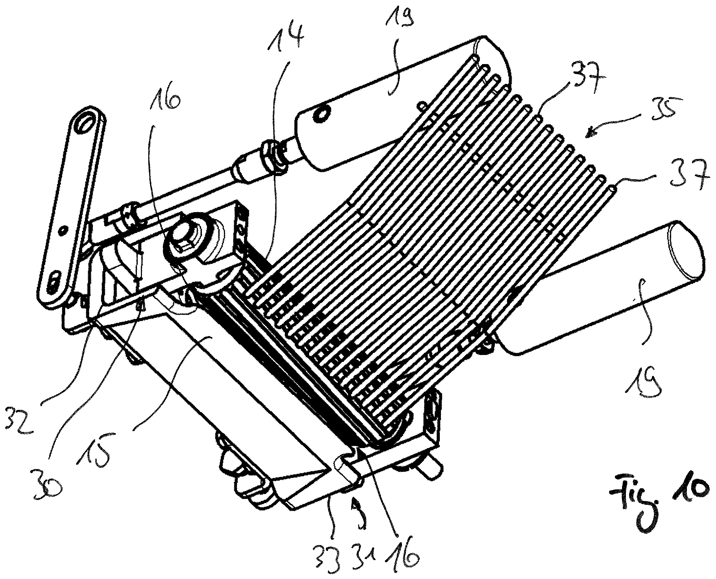

Vorzugsweise ist im Einlaufbereich 34 der Fischfilets 13 in die Stiftgrätenentfernungseinrichtung 11 ein Niederhalter 35 angeordnet. Der Niederhalter 35 bildet mit der einlaufseitigen geneigten Ebene 24 einen Einlauftrichter 36. Der Niederhalter 35 ist bevorzugt aus einer Mehrzahl stabförmiger Elemente 37 gebildet. Die stabförmigen Elemente 37 sind gitterartig angeordnet. Zum weiteren Aufbau des Niederhalters 35 wird auf die Fig. 10 verwiesen, die die in Fig. 8 gezeigte Detailansicht der erfindungsgemäßen Vorrichtung mit Blickrichtung von unten zeigt.

Weiter bevorzugt umfasst die erfindungsgemäße Stiftgrätenentfernungseinrichtung 11 eine Absaugeinrichtung 38, mittels derer die entfernten Stiftgräten 17 abgesaugt werden. Des Weiteren kann im Bereich der Walze 14 bzw. des Gegenlageelements 15 - in der Zeichnung nicht gezeigte - Spüleinrichtung vorgesehen sein, mittels derer eine zusätzliche Reinigungswirkung der Walze 14 bzw. des Gegenlageelements 15 durch Spülen mittels Spülflüssigkeit erzielt wird. Die Spüleinrichtung ist vorzugsweise mit dem Steuermittel 18 verbunden, so dass ein Reinigungsvorgang durch Spülen mittels der Spüleinrichtung insbesondere in der Hebestellung und/oder in der Reinigungsstellung veranlasst wird. Weiter bevorzugt wird als Sprühmedium Luft bzw. Presslift verwendet.

Vorteilhafterweise wird die Drehgeschwindigkeit der Walze 14 in der Reinigungsstellung zeitweilig erhöht, um Verunreinigungen und Gräten unter Fliehkrafteinwirkung zu entfernen. Weiter bevorzugt ist eine zeitweilige Umkehrung der Drehrichtung hierzu vorgesehen.

## Patentansprüche

1. Vorrichtung (10) zum Entfernen von Stiftgräten (17) aus Fischfilets (13), umfassend
mindestens eine Stiftgrätenentfernungseinrichtung (11) sowie eine zum Vorbeiführen der Fischfilets (13) an der mindestens einen Stiftgrätenentfernungeinrichtung (11) eingerichtete Fördereinrichtung (12), wobei die Stiftgrätenentfernungseinrichtung (11) eine rotierend angetriebene profilierte Walze (14) mit einem einen Klemmspalt (16) bildenden Gegenlageelement (15) aufweist, wobei die Walze (14) und das Gegenlageelement (15) eingerichtet sind, die Stiftgräten (17) in dem Klemmspalt (16) durch Klemmung zu fassen und unter Zugkraftbeaufschlagung aus den Fischfilets (13) zu entfernen,
**dadurch gekennzeichnet, dass**
das Gegenlageelement (15) und die Walze (14) mittels Steuermitteln (18) relativ zueinander steuerbeweglich eingerichtet sind.

2. Vorrichtung nach Anspruch 1, **dadurch gekennzeichnet, dass** die Steuermittel (18) eine Steuereinrichtung mit mindestens einem Stellglied (19) umfassen, wobei die Steuereinrichtung eingerichtet ist, mittels des mindestens einen Stellgliedes (19) das Gegenlageelement (15) und die Walze (14) aus einer Klemmstellung unter Weitung des Klemmspaltes (16) in eine Reinigungsstellung und umgekehrt relativ zueinander zu bewegen.

3. Vorrichtung nach Anspruch 2, **dadurch gekennzeichnet, dass** die Stiftgrätenentfernungseinrichtung (11) mittels mindestens eines weiteren Stellgliedes (20) relativ zu der Fördereinrichtung (23) steuerbeweglich eingerichtet ist.

4. Vorrichtung nach Anspruch 3, **dadurch gekennzeichnet, dass** der Abstand zwischen der Stiftgrätenentfernungseinrichtung (11) und der Fördereinrichtung (12) einstellbar eingerichtet ist.

5. Vorrichtung nach einem der Ansprüche 3 oder 4, **dadurch gekennzeichnet, dass** eine Auflagekraft, mit der die Stiftgrätenentfernungseinrichtung (11) auf die Fischfilets (13) wirkt, mittels der Steuermittel (18) variabel einstellbar eingerichtet ist.

6. Vorrichtung nach einem der Ansprüche 1 bis 5, **dadurch gekennzeichnet, dass** die Steuermittel (18) weiter eine zur Positionsbestimmung der an der Stiftgrätenentfernungseinrichtung (11) vorbeigeführten Fischfilets (13) eingerichtete Positionsermittlungseinrichtung (26) umfassen.

7. Vorrichtung nach Anspruch 6, **dadurch gekennzeichnet, dass** die Positionsermittlungseinrichtung (26) weiter zum Ermitteln von ersten Zeitpunkten, zu denen grätenfreie Bereiche (27) der Fischfilets (13) im Bereich des Klemmspalts (16) vorbeigeführt werden, ausgebildet und eingerichtet ist.

8. Vorrichtung nach Anspruch 6, **dadurch gekennzeichnet, dass** die Positionsermittlungseinrichtung (26) weiter zum Ermitteln von zweiten Zeitpunkten, zu denen der Bereich des Klemmspalts (16) fischfiletfrei ist, ausgebildet und eingerichtet ist.

9. Vorrichtung nach einem der Ansprüche 7 und/oder 8, **dadurch gekennzeichnet, dass** die Positionsermittlungseinrichtung (26) eingerichtet ist, die Steuermittel (18) innerhalb vorgegebener Zeitintervalle jeweils zu den ersten Zeitpunkten und/oder zu den zweiten Zeitpunkten zu veranlassen, mittels des mindestens einen Stellgliedes (19) das Gegenlageelement (15) in die Reinigungsstellung zu überführen.

10. Vorrichtung nach Anspruch 9, **dadurch gekennzeichnet, dass** die Positionsermittlungseinrichtung (26) weiter eingerichtet ist, die Steuermittel (18) innerhalb der vorgegebenen Zeitintervalle jeweils zu den ersten Zeitpunkten und/oder zu den zweiten Zeitpunkten zu veranlassen, mittels des mindestens einen weiteren Stellgliedes (20) den Abstand zwischen der Fördereinrichtung (12) und der Stiftgrätenentfernungseinrichtung (11) zeitweilig zu vergrößern.

11. Vorrichtung nach einem der Ansprüche 2 bis 10, **dadurch gekennzeichnet, dass** das Gegenlageelement (15) mittels des mindestens einen Stellgliedes (19) unter Rückstellkraftbeaufschlagung zum Klemmen der Stiftgräten (17) ausweichlich gelagert ist.

12. Vorrichtung nach Anspruch 11, **dadurch gekennzeichnet, dass** die Größe der Rückstellkraftbeaufschlagung mittels der Steuermittel (18) variabel einstellbar eingerichtet ist.

13. Vorrichtung nach einem der Ansprüche 1 bis 12, **dadurch gekennzeichnet, dass** das Gegenlageelement (15) schwimmend gelagert angeordnet ist.

14. Verfahren zum Entfernen von Stiftgräten (17) aus Fischfilets (13), umfassend
Vorbeiführen der Fischfilets (13) an mindestens einer Stiftgrätenentfernungeinrichtung (11) mittels einer Fördereinrichtung (12),
Erfassen der Stiftgräten (17) durch Klemmen mittels der Stiftgrätenentfernungseinrichtung (11) in einem von einer rotierend angetriebenen profilierte Walze (14) und einem Gegenlageelement (15) gebildeten Klemmspalt (16),
Beaufschlagen der Stiftgräten (17) mit einer Zugkraft zum Entfernern der Stiftgräten (17) aus den Fischfilets (13),
**gekennzeichnet durch**
gesteuertes Bewegen des Gegenlageelements (15) und der Walze (14) relativ zueinander mittels Steuermitteln (18).

15. Verfahren nach Anspruch 14, **gekennzeichnet durch** Ansteuern mindestens eines Stellgliedes (19) mittels der Steuermittel (18) so, dass das Gegenlageelement (15) und die Walze (14) aus einer Klemmstellung unter Weitung des Klemmspaltes (16) in eine Reinigungsstellung und umgekehrt relativ zueinander bewegt werden.

16. Verfahren nach Anspruch 15, **gekennzeichnet durch** gesteuertes Bewegen der Stiftgrätenentfernungseinrichtung (11) mittels mindestens eines weiteren durch die Steuermittel (18) angesteuerten Stellgliedes (20) relativ zu der Fördereinrichtung (23).

17. Verfahren nach Anspruch 16, **dadurch gekennzeichnet, dass** der Abstand zwischen der Stiftgrätenentfernungseinrichtung (11) und der Fördereinrichtung (12) voreinstellbar ist.

18. Verfahren nach einem der Ansprüche 16 oder 17, **dadurch gekennzeichnet, dass** eine Auflagekraft, mit der die Stiftgrätenentfernungseinrichtung (11) auf die Fischfilets (13) wirkt, mittels der Steuermittel (18) variabel einstellbar eingerichtet ist.

19. Verfahren nach einem der Ansprüche 14 bis 18, **gekennzeichnet durch** Ermitteln der Position der an der Stiftgrätenentfernungseinrichtung (11) vorbeigeführten Fischfilets (13) mittels einer Positionsermittlungseinrichtung (26).

20. Verfahren nach Anspruch 19, **gekennzeichnet durch** Ermitteln von ersten Zeitpunkten, zu denen grätenfreie Bereiche (27) der Fischfilets (13) im Bereich des Klemmspalts (16) vorbeigeführt werden, mittels der Positionsermittlungseinrichtung (26).

21. Verfahren nach Anspruch 19, **gekennzeichnet durch** Ermitteln von zweiten Zeitpunkten, zu denen der Bereich des Klemmspalts (16) fischfiletfrei ist, mittels der Positionsermittlungseinrichtung (26).

22. Verfahren nach einem der Ansprüche 20 und/oder 21, **gekennzeichnet durch** Veranlassen innerhalb vorgegebener Zeitintervalle jeweils zu den ersten Zeitpunkten und/oder zu den zweiten Zeitpunkten mittels des mindestens einen Stellgliedes (19) das Gegenlageelement (15) in die Reinigungsstellung zu überführen.

23. Verfahren nach Anspruch 22, **gekennzeichnet durch** Veranlassen innerhalb der vorgegebenen Zeitintervalle, jeweils zu den ersten Zeitpunkten und/oder zu den zweiten Zeitpunkten mittels des mindestens einen weiteren Stellgliedes (20) den Abstand zwischen der Fördereinrichtung (12) und der Stiftgrätenentfernungseinrichtung (11) zeitweilig zu vergrößern.

24. Verfahren nach einem der Ansprüche 14 bis 23, **gekennzeichnet durch** Beaufschlagen des Gegenlageelements (15) mittels des mindestens einen Stellgliedes (19) mit einer Rückstellkraft zum Klemmen der Stiftgräten (17), so dass das Gegenlageelement (15) ausweichlich gelagert ist.

25. Verfahren nach Anspruch 24, **dadurch gekennzeichnet, dass** die Größe der Beaufschlagung des Gegenlageelements (15) mit der Rückstellkraft mittels der Steuermittel (18) variabel einstellbar ist.

26. Verfahren nach einem der Ansprüche 14 bis 25, **gekennzeichnet durch** schwimmendes Lagern des Gegenlageelements (15).

## Claims

1. Apparatus (10) for removing pin bones (17) from fish fillets (13), comprising at least one pin bone removal device (11) as well as
a conveying device (12) configured to convey the fish fillets (13) past the at least one pin bone removal device (11), wherein
the pin bone removal device (11) comprises a rotationally driven profiled roller (14) having a counter-bearing element (15) forming a clamping gap (16), wherein the roller (14) and the counter-bearing element (15) are designed to grasp the pin bones (17) in the clamping gap (16) by clamping and to remove said bones from the fish fillets (13) by applying tensile force,
**characterised in that**
the counter-bearing element (15) and the roller (14) are designed to be controllably moved with respect to each other by control means (18).

2. Apparatus according to claim 1, **characterised in that** the control means (18) comprise a control device having at least one actuator (19), wherein, by means of the at least one actuator (19), the control device is designed to move the counter-bearing element (15) and the roller (14) with respect to each other, by expanding the clamping gap (16), from a clamping position to a cleaning position and vice versa.

3. Apparatus according to claim 2, **characterised in that** the pin bone removal device (11) is designed to be controllably moved with respect to the conveying device (23) by means of at least one further actuator (20).

4. Apparatus according to claim 3, **characterised in that** the distance between the pin bone removal device (11) and the conveying device (12) is designed to be adjustable.

5. Apparatus according to one of claims 3 or 4, **characterised in that** a bearing force with which the pin bone removal device (11) acts on the fish fillets (13) is designed to be variably adjustable by the control means (18).

6. Apparatus according to any one of claims 1 to 5, **characterised in that** the control means (18) further comprise a position determination device (26) designed to determine the position of the fish fillets (13) conveyed past the pin bone removal device (11).

7. Apparatus according to claim 6, **characterised in that** the position determination device (26) is further designed and configured to determine first points in time at which boneless areas (27) of the fish fillets (13) are conveyed past in the area of the clamping gap (16).

8. Apparatus according to claim 6, **characterised in that** the position determination device (26) is further designed and configured to determine second points in time at which the area of the clamping gap (16) is free of fish fillets.

9. Apparatus according to one of claims 7 and/or 8, **characterised in that** the position determination device (26) is designed to cause the control means (18) to transfer the counter-bearing element (15) to the cleaning position by means of the at least one actuator (19) within specified time intervals, at the first points in time and/or at the second points in time respectively.

10. Apparatus according to claim 9, **characterised in that** the position determination device (26) is further designed to cause the control means (18) to temporarily enlarge the distance between the conveying device (12) and the pin bone removal device (11) by means of the at least one further actuator (20) within the specified time intervals, at the first points in time and/or at the second points in time respectively.

11. Apparatus according to any one of claims 2 to 10, **characterised in that** the counter-bearing element (15) is evasively mounted by means of the at least one actuator (19) under application of a restoring force for clamping the pin bones (17).

12. Apparatus according to claim 11, **characterised in that** the magnitude of the restoring force applied by the control means (18) is designed to be variably adjustable.

13. Apparatus according to any one of claims 1 to 12, **characterised in that** the counter-bearing element (15) is mounted in a floating manner.

14. Method for removing pin bones (17) from fish fillets (13), comprising
Conveying the fish fillets (13) past at least one pin bone removal device (11) by means of a conveying device (12),
Grasping the pin bones (17) by clamping by means of the pin bone removal device (11) in a clamping gap (16) formed by a rotationally driven profiled roller (14) and a counter-bearing element (15),
Applying a tensile force to the pin bones (17) to remove said pin bones (17) from the fish fillets (13),
**characterised by**
controlled moving of the counter-bearing element (15) and the roller (14) with respect to each other by control means (18).

15. Method according to claim 14, **characterised by** activation of at least one actuator (19) by the control means (18) such that the counter-bearing element (15) and the roller (14) are moved with respect to each other, by expanding the clamping gap (16), from a clamping position to a cleaning position and vice versa.

16. Method according to claim 15, **characterised by** controlled moving of the pin bone removal device (11) with respect to the conveying device (23) by means of the at least one further actuator (20) activated by the control means (18).

17. Method according to claim 16, **characterised in that** the distance between the pin bone removal device (11) and the conveying device (12) is pre-settable.

18. Method according to one of claims 16 or 17, **characterised in that** a bearing force with which the pin bone removal device (11) acts on the fish fillets (13) is designed to be variably adjustable by the control means (18).

19. Method according to any one of claims 14 to 18, **characterised by** determining the position of the fish fillets (13) conveyed past the pin bone removal device (11) by means of a position determination device (26).

20. Method according to claim 19, **characterised by** determining first points in time at which boneless areas (27) of the fish fillets (13) are conveyed past in the area of the clamping gap (16) by means of the position determination device (26).

21. Method according to claim 19, **characterised by** determining second points in time at which the area of the clamping gap (16) is free of fish fillets by means of the position determination device (26).

22. Method according to one of claims 20 and/or 21, **characterised by** causing the counter-bearing element (15) to be transferred to the cleaning position by the at least one actuator (19) within specified time intervals, at the first points in time and/or at the second points in time respectively

23. Method according to claim 22, **characterised by** causing the distance between the conveying device (12) and the pin bone removal device (11) to be temporarily enlarged by the at least one further actuator (20) within the specified time intervals, at the first points in time and/or at the second points in time respectively.

24. Method according to any one of claims 14 to 23, **characterised by** applying a restoring force to the counter-bearing element (15) by means of the at least one actuator (19) for clamping the pin bones (17) such that the counter-bearing element (15) is evasively mounted.

25. Method according to claim 24, **characterised in that** the magnitude of the restoring force applied to the counter-bearing element (15) by the control means (18) is variably adjustable.

26. Method according to any one of claims 14 to 25, **characterised by** floating mounting of the counter-bearing element (15).

## Revendications

1. Dispositif (10) destiné au retrait d'arêtes (17) dans des filets de poisson (13), comprenant
au moins un dispositif de retrait d'arêtes (11) ainsi
qu'un dispositif de convoyage (12) conçu pour faire passer les filets de poisson (13) par l'au moins un dispositif de retrait d'arêtes (11),
le dispositif de retrait d'arêtes (11) présentant un rouleau (14) profilé entraîné en rotation avec un élément de contre-appui (15) qui forme une fente de serrage (16), le rouleau (14) et l'élément de contre-appui (15) étant conçus pour appréhender par serrage les arêtes (17) dans la fente de serrage (16) et pour les retirer des filets de poisson (13) sous application d'une force de traction,
**caractérisé en ce que**
l'élément de contre-appui (15) et le rouleau (14) sont conçus pour être mobiles par commande l'un par rapport à l'autre à l'aide de moyens de commande (18).

2. Dispositif selon la revendication 1, **caractérisé en ce que** les moyens de commande (18) comprennent un dispositif de commande muni d'au moins un actionneur (19), le dispositif de commande étant conçu pour déplacer, à l'aide de l'au moins un actionneur (19), l'élément de contre-appui (15) et le rouleau (14) l'un par rapport à l'autre pour les faire passer d'une position de serrage à une position de nettoyage, par élargissement de la fente de serrage (16), et inversement.

3. Dispositif selon la revendication 2, **caractérisé en ce que** le dispositif de retrait d'arêtes (11) est conçu pour être mobile par commande par rapport au dispositif de convoyage (23) à l'aide d'au moins un autre actionneur (20).

4. Dispositif selon la revendication 3, **caractérisé en ce que** la distance séparant le dispositif de retrait d'arêtes (11) et le dispositif de convoyage (12) est conçue susceptible d'être réglée.

5. Dispositif selon l'une quelconque des revendications 3 ou 4, **caractérisé en ce qu'**une réaction d'appui exercée par le dispositif de retrait d'arêtes (11) sur les filets de poisson (13) est conçue susceptible d'être réglée de manière variable à l'aide des moyens de commande (18).

6. Dispositif selon l'une quelconque des revendications 1 à 5, **caractérisé en ce que** les moyens de commande (18) comprennent de plus un dispositif de détermination de position (26) conçu pour déterminer la position des filets de poisson (13) que l'on fait passer par le dispositif de retrait d'arêtes (11).

7. Dispositif selon la revendication 6, **caractérisé en ce que** le dispositif de détermination de position (26) est réalisé et conçu de plus pour déterminer des premiers moments auxquels on fait passer des zones sans arête (27) des filets de poisson (13) dans la zone de la fente de serrage (16).

8. Dispositif selon la revendication 6, **caractérisé en ce que** le dispositif de détermination de position (26) est réalisé et conçu de plus pour déterminer des deuxièmes moments auxquels la zone de la fente de serrage (16) est exempte de filet de poisson.

9. Dispositif selon l'une quelconque des revendications 7 et/ou 8, **caractérisé en ce que** le dispositif de détermination de position (26) est conçu pour faire en sorte, dans des intervalles de temps donnés et respectivement aux premiers moments et/ou aux deuxièmes moments, que les moyens de commande (18) transfèrent l'élément de contre-appui (15) dans la position de nettoyage à l'aide de l'au moins un actionneur (19).

10. Dispositif selon la revendication 9, **caractérisé en ce que** le dispositif de détermination de position (26) est de plus conçu pour faire en sorte, dans les intervalles de temps donnés et respectivement aux premiers moments et/ou aux deuxièmes moments, que les moyens de commande (18) agrandissent temporairement à l'aide de l'au moins un autre actionneur (20) la distance séparant le dispositif de convoyage (12) et le dispositif de retrait d'arêtes (11).

11. Dispositif selon l'une quelconque des revendications 2 à 10, **caractérisé en ce que** l'élément de contre-appui (15) est disposé de telle sorte à se dérober pour serrer les arêtes (17), à l'aide de l'au moins un actionneur (19) sous l'application d'une force de rappel.

12. Dispositif selon la revendication 11, **caractérisé en ce que** la valeur de la force de rappel appliquée est conçue susceptible d'être réglée de manière variable à l'aide des moyens de commande (18).

13. Dispositif selon l'une quelconque des revendications 1 à 12, **caractérisé en ce que** l'élément de contre-appui (15) est agencé disposé de manière flottante.

14. Procédé destiné au retrait d'arêtes (17) dans des filets de poisson (13), comprenant
faire passer les filets (13) par au moins un dispositif de retrait d'arêtes (11) à l'aide d'un dispositif de convoyage (12),
appréhender les arêtes (17) par serrage à l'aide du dispositif de retrait d'arêtes (11) dans une fente de serrage (16) formée par un rouleau (14) profilé entraîné en rotation et un élément de contre-appui (15),
appliquer une force de traction sur les arêtes (17) pour retirer les arêtes (17) dans les filets de poisson (13),
**caractérisé par**
un déplacement commandé de l'élément de contre-appui (15) et du rouleau (14) l'un par rapport à l'autre à l'aide de moyens de commande (18).

15. Procédé selon la revendication 14, **caractérisé en ce qu'**au moins un actionneur (19) est commandé à l'aide de moyens de commande (18) de telle sorte que l'élément de contre-appui (15) et le rouleau (14) sont déplacés l'un par rapport à l'autre pour passer par élargissement de la fente de serrage (16) d'une position de serrage à une position de nettoyage, et inversement.

16. Procédé selon la revendication 15, **caractérisé en ce que** le dispositif de retrait d'arêtes (11) est déplacé par commande par rapport au dispositif de convoyage (23) à l'aide d'au moins un autre actionneur (20) commandé par les moyens de commande (18).

17. Procédé selon la revendication 16, **caractérisé en ce que** la distance séparant le dispositif de retrait d'arêtes (11) et le dispositif de convoyage (12) est conçue susceptible d'être réglée au préalable.

18. Procédé selon l'une quelconque des revendications 16 ou 17, **caractérisé en ce qu'**une force d'appui exercée par le dispositif de retrait d'arêtes (11) sur les filets de poisson (13) est conçue susceptible d'être réglée de manière variable à l'aide des moyens de commande (18).

19. Procédé selon l'une quelconque des revendications 14 à 18, **caractérisé en ce que** la position des filets de poisson (13) que l'on fait passer par le dispositif de retrait d'arêtes (11) est déterminée à l'aide d'un dispositif de détermination de position (26).

20. Procédé selon la revendication 19, **caractérisé en ce que** sont déterminés à l'aide du dispositif de détermination de position (26) des premiers moments auxquels on fait passer des zones sans arête (27) des filets de poisson (13) dans la zone de la fente de serrage (16).

21. Procédé selon la revendication 19, **caractérisé en ce que** sont déterminés à l'aide du dispositif de détermination de position (26) des deuxièmes moments auxquels la zone de la fente de serrage (16) est exempte de filet de poisson.

22. Procédé selon l'une quelconque des revendications 20 et/ou 21, **caractérisé en ce qu'**est fait en sorte, à l'aide de l'au moins un actionneur (19), dans des intervalles de temps donnés et respectivement aux premiers moments et/ou aux deuxièmes moments, que l'élément de contre-appui (15) soit transféré dans la position de nettoyage.

23. Procédé selon la revendication 22, **caractérisé en ce qu'**est fait en sorte, à l'aide de l'au moins un autre actionneur (20), dans les intervalles de temps donnés et respectivement aux premiers moments et/ou aux deuxièmes moments, que la distance séparant le dispositif de convoyage (12) et le dispositif de retrait d'arêtes (11) soit agrandie temporairement.

24. Procédé selon l'une quelconque des revendications 14 à 23, **caractérisé en ce qu'**est appliquée une force de rappel sur l'élément de contre-appui (15) à l'aide de l'au moins un actionneur (19) pour serrer les arêtes (17), de telle sorte que l'élément de contre-appui (15) est disposé en dérobement.

25. Procédé selon la revendication 24, **caractérisé en ce que** la valeur de la force de rappel appliquée sur l'élément de contre-appui (15) est conçue susceptible d'être réglée de manière variable à l'aide des moyens de commande (18).

26. Procédé selon l'une quelconque des revendications 14 à 25, **caractérisé en ce que** l'élément de contre-appui (15) est disposé flottant.
